Europäisches Patentamt

**European Patent Office**

Office européen des brevets

(11) Publication number : **0 323 873 B1**

# EUROPEAN PATENT SPECIFICATION

(45) Date of publication of patent specification :
**10.06.92 Bulletin 92/24**

(51) Int. Cl.⁵ : **F16L 11/12, F16L 1/12**

(21) Application number : **89200022.5**

(22) Date of filing : **05.01.89**

(54) **Connecting tube assembly between a conduit floating on the surface of the water and a conduit present on a vessel.**

The file contains technical information submitted after the application was filed and not included in this specification

(30) Priority : **06.01.88 NL 8800019**

(43) Date of publication of application :
**12.07.89 Bulletin 89/28**

(45) Publication of the grant of the patent :
**10.06.92 Bulletin 92/24**

(84) Designated Contracting States :
**DE FR GB IT NL SE**

(56) References cited :
**FR-A- 1 307 986**
**GB-A- 1 495 040**
**US-A- 3 465 374**
**US-A- 3 674 062**

(73) Proprietor : **Vredestein N.V.**
**President Kennedylaan 104**
**NL-6883 AX Velp (NL)**

(72) Inventor : **Gunsing, Theodorus Wilhelmus Maria**
**Fluitersdreef 18**
**NL-6871 LP Renkum (NL)**

(74) Representative : **Lips, Hendrik Jan George, Ir. et al**
**HAAGSCH OCTROOIBUREAU Breitnerlaan 146**
**NL-2596 HG Den Haag (NL)**

## Description

The invention relates to a connecting tube assembly in particular for obtaining the connection between a conduit floating on the surface of the water and a conduit present on a vessel, said connecting tube assembly and said conduit present on the vessel each being provided with a part of a quick coupling, said connecting tube assembly being provided with a collar giving buoyancy near the end which is connected to the quick-coupling part.

Such a connecting tube assembly is fabricated and delivered by applicant and is shown in a pamphlet published by applicant.

Floating conduits e.g. are used for the transport of spoil, sand, oil and such like. In case of relatively small dimensions of the conduit direct coupling of it to a conduit present on a vessel, gives less difficulties. In case of larger dimensions, such as e.g. above a diameter of 300 mm, direct coupling starts to be difficult and special connecting tube assemblies are used of the type described above.

Obviously in this case it will be tried to position the collar, giving buoyancy, as close as possible near the quick-coupling part, but a given distance between said parts may be needed for establishing the connection between both quick-coupling parts.

This brings with it, that when disconnecting the quick-coupling, and when releasing the related end of the connecting tube, such as e.g. when the vessel has to sail away, the quick-coupling part connected to the connecting tube will plunge into the water by the considerably weight of it. In case of shallow water the quick-coupling part can come into contact with the bottom, so that the quick-coupling part then can become dirty. When using the coupling the next time, this may give difficulties. Although these difficulties are not present when the water is sufficiently deep, the disadvantage then is that a considerable portion of the quick-coupling part will be present below the surface of the water. This give difficulties when the quick-coupling part has to be connected to hoisting appliances when the coupling tube assembly has to be connected again to a conduit present on a vessel.

Now the object of the invention is to remove this disadvantage and to that end it is attended that the connecting tube assembly is provided with a counterweight at a distance from the collar and at the opposite side from the quick coupling part said counterweight opposing the tilting moment, which is exerted on the tube by the quick-coupling part in the floating condition of the connecting tube assembly.

By this it can be obtained, that the coupling tube assembly will take a more horizontal position in floating condition so that also the quick-coupling part will be less deep below the surface of the water.

It is important, however, that the counterweight itself contributes to the total weight of the connecting tube assembly. To keep the mass of the counterweight as small as possible it will be desired to mount the counterweight at the largest possible distance from the quick-coupling part. When, as usual, the tube shaped portion of the assembly connected to the quick-coupling part is made from rubber or such like somewhat flexible material, this will give the disadvantage that the tube shaped part will go to bend so that then a given portion of the quick coupling part will still come to lie below the surface of the water.

To remove this effect as much as possible, it can be provided, that the counterweight is positioned directly besides the collar and the mass of the counterweight is increased while increasing the buoyancy of the collar simultaneously.

Although a coupling tube assembly according to such an embodiment may function well, the tube shaped portion of the assembly still will come into a somewhat bended shape with the disadvantage indicated above. By the greater volume of the collar and the more heavier counter-weight also the handling of the connecting tube assembly will be more difficult.

To remove these objections according the another embodiment of the invention it is provided that the tube shaped portion of the assembly, to wit at least that portion of it connecting the quick-coupling part to the counterweight, is made from a substantially stiff material, such as from metal, a fibre reinforced synthetic material or a such like material.

In practice it has appeared that this does not give difficulties during handling the connecting tube assembly.

By the stiff executing of the tube shaped part of the assembly it is possible to position the counterweight at a greater distance from the quick coupling part by which the mass of the counterweight can be kept limited and by this also the buoyancy of the collar. It has appeared that such a connecting tube assembly can be balanced perfectly horizontally.

According to an embodiment of the invention the coupling tube assembly may comprise two or more tube sections being connected to each other by means of flanges or such like.

This e.g. can be done to make the manufacturing and the transport of the connecting assembly easier but also to connect other types of quick couplings and counter-weights fitting to this with a given standard tube.

In US-A-3,674,062 it is described that a ship, such as a tanker, by means of a flexible hose and a tubular swing arm, provided below the water level, can be connected to a pipe line running to a shore installation. The end of the flexible hose, remote from the end connected to the swing arm, is provided with a coupling portion which, by means of a line is connected to a buoy. Said buoy can be picked up by the ship so that the flexible hose can be brought upwards to the loading and unloading connection provided on the ship. To compensate variations in the distance between the end of the swing arm and the other end of the flexible hose and to prevent that said flexible hose will contact the bottom of the water, the hose portion, being connected to the swing arm is having positive buoyancy, while the other portion is having a negative buoyancy.

Now the invention is further described with the help of embodiments, shown in the drawing, in which:

Fig. 1 schematically shows a side view of a connecting tube assembly, connected to a conduit present on a vessel and to a floating conduit;

Fig. 2 schematically shows a side view corresponding to Fig. 1 but with the connecting tube assembly disconnected from the conduit present on the vessel;

Fig. 3 schematically shows a side view of a connecting tube assembly substantially corresponding with that of Fig. 2, but in which the counterweight is provided close to the quick-coupling part;

Fig. 4 schematically shows a longitudinal section of a connecting tube assembly the tube shaped portion of which is made from a substantially stiff material; and

Fig. 5 schematically shows a side view of the connecting tube assembly of Fig. 4 after this is connected with a conduit present on a vessel and with a floating conduit.

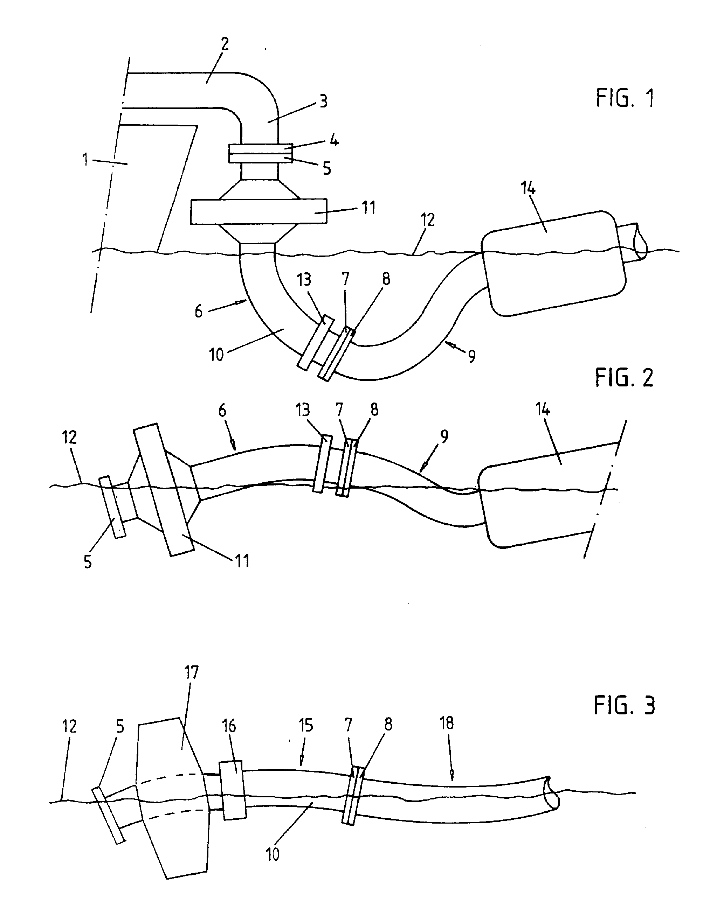

Fig. 1 shows a vessel 1 on which the conduit 2 is present which at its free end 3 is provided with a quick-coupling part 4 which may cooperate with a corresponding part 5 forming the end of the connecting tube assembly 6. The other end of the assembly 6 is provided with a flange 7 for achieving a connection with the flange 8 of the conduit portion 9.

The connecting tube assembly 6 futher comprises the tube 10 made of a flexible material such as rubber which in view of the strength will be provided with inlays from textile or such like.

To keep the connecting tube assembly 6 floating after disconnecting of the quick-coupling parts 4 and 5, the assembly is provided with a collar 11 positioned close to the quick-couplig part 5 and giving buoyancy and being present as close as possible to the heavy quick-coupling part 5. When it concerns e.g. a transport conduit for spoil with a diameter of 800 mm, the weight of the quick-coupling part can amount 1500 kg or more.

To prevent that the quick coupling part 5, after disconnecting of the parts 4 and 5, as seen in Fig. 2, will be too far below the surface of the water, indicated with the line 12, the counterweight is mounted near the flange 7 and e.g. can be in the shape of a leaden band.

As appears from Fig. 2 also in case of applying the counterweight 13 the tube, however, can be distorted such that the quick-coupling part 5 connected to it will be below the surface 12 of the water to a great extend.

To obtain a somewhat smooth shape of the conduit in the coupled condition shown in Fig. 1, the conduit portion 9 preferably will be executed such that the portion of it directly joining the connecting tube assembly 6 will have no buoyancy. So the buoyancy of the conduit portion 9 substantially will be obtained by the floating body 14, present near the other end of the conduit portion 9.

Fig. 3 shows a connecting tube assembly 15, comprising again the quick-coupling part 5 and the flange 7. However, now use is made of a counterweight 16 with a greater mass than the counterweight 13 used in case of the embodiment according to Figs.1 and 2. Now the counterweight 16 is present closer to the floating body 17 which also has to give a corresponding larger buoyancy and so will have a bigger volume.

The floating body 16 e.g. can be obtained by providing the floating body 11, shown in the Figs. 1 and 2, with additional elements, so that given standard parts can be used.

The counterweight 16 can be connected to a short tube section which by means of flanges is connected to the further tube section so that counterweights with a different mass can easily be incorporated in the connecting tube assembly.

In case of such an embodiment the tube section 10 might have a shorter length and the flange 8 might be connected with a floating conduit 18 with a minimum buoyancy being equally divided over its length. Then no use needs to be made of a special conduit section 9 as this is done in case of the embodiment according to the Figs. 1 and 2.

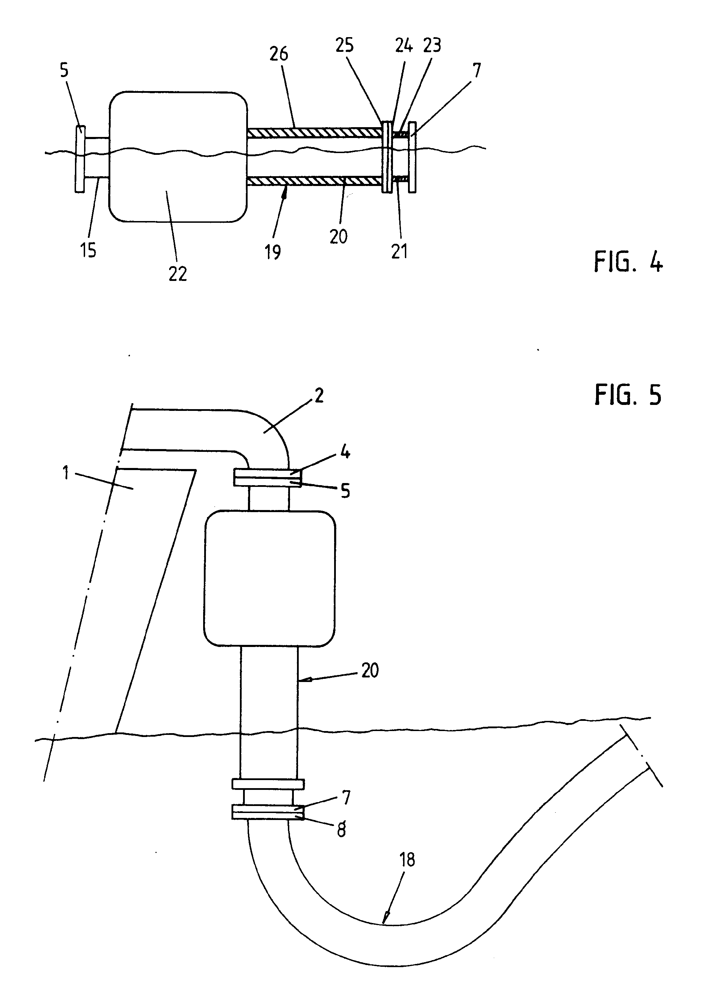

Fig. 4 schematically shows a longitudinally section of a connecting tube assembly 19 comprising a stiff tube section 20 one end of which is provided with the quick-coupling part 5 and the other end with the flange 7. So the parts 5 and 7 are indicated with the same reference numbers as in case of the embodiments described above.

Now the counterweight 21 can be mounted at a greater distance of the quick-coupling part 5 and so can have a smaller mass than the counterweight 16 in case of the embodiment according to Fig. 3, nevertheless taking care for it that the coupling tube assembly 19 will be in a substantially horizontal position when in floating condition. To this end the floating body 22 will be present close to the relatively quick coupling part 5.

Possibly the counterweight 21 can be mounted to a separate tube section 23 which then is provided with a flange 24 which is connected to the flange 25 provided at the end of the tube section 20. The tube section 20 further can be provided with a body 26 giving buoyancy.

Fig. 5 schematically shows the connecting tube assembly 19 when this is connected to a conduit 2 present on a vessel 1 and provided with the quick-coupling part 4 at the one side and to a floating conduit 18 at the other side, as this is indicated in Fig. 3.

## Claims

1. Connecting tube assembly in particular for obtaining the connection between a conduit (9, 18) present in water and a conduit (2) present on a vessel (1), said connecting tube assembly (6, 10, 15, 19) and said conduit (2) present on the vessel (1) being provided with coupling means (4, 5), said connecting tube assembly (6) at least partly having positive buoyancy, the end of said connecting tube which has to be connected to the conduit (2) present on the vessel being connected to an element (11) giving positive buoyancy,
characterized in
that the part of said conduit near the couplings means (5), which has to be connected to the conduit (2) present on said vessel (1), is provided with a collar (11,17,22) giving positive buoyancy to this of the conduit, and is provided with a counterweight (13, 16, 21) at a distance from said collar and at the opposite side thereof from the coupling means (5), said counter weight opposing the tilting moment which is exerted on the conduit by the coupling means (5) in the floating condition of the connecting tube assembly.

2. Connecting tube assembly according to claim 1,
characterized in
that the counterweight (16) is positioned directly besides the collar (17) and the mass of the counterweight (16) is increased while increasing the buoyancy of the collar (17) simultaneously.

3. Connecting tube assembly according to claim 1 or 3,
characterized in
that the tube shaped portion (20) of the assembly (19), to wit at least that portion of it connecting the quick-coupling part (5) to the counterweight (21), is made from a substantially stiff material, such as from metal, a fibre reinforced synthetic material or a such like material.

4. Connecting tube assembly according to one of the preceding claims,
characterized in
that the connecting tube assembly (6,15,19) comprises two or more tube sections (20,23) being connected to each other by means of flanges (24,25) or such like.

## Patentansprüche

1. Kupplungsrohr insbesondere zur Herstellung der Verbindung zwischen einer im Wasser vorhandenen Leitung (9, 18) und einer auf einem Schiff (1) vorhandenen Leitung (2), wobei das genannte Kupplungsrohr (6,10,15,19) und die genannte auf dem Schiff (1) vorhandene Leitung (2) mit Kupplungsmittel (4,5) versehen sind und das genannte Kupplungsrohr (6) wenigstens teilweise positive Schwimmfähigkeit aufweist, wobei das Ende des Kupplungsrohrs, das mit der auf dem Schiff vorhandenen Leitung (2) zu verbinden ist, mit einem positive Schwimmfähigkeit liefernden Element (11) verbunden ist,
**dadurch gekennzeichnet,**
dass der Teil der Leitung nahe dem Kupplungsmittel (5), das mit der auf dem Schiff (1) vorhandenen Leitung (2) zu verbinden ist, mit einem diesem Teil der Leitung positive Schwimmfähigkeit zu liefernden Kragen (11,17,22) versehen ist und in einem Abstand von dem Kragen und auf der anderen Seite als wo sich das Kupplungsmittel (5) befindet, mit einem Gegengewicht (13,16,21) versehen ist, wobei das Gegengewicht dem Kippmoment, das im schwimmenden Zustand des Kupplungsrohrs auf die Leitung durch das Kupplungsmittel (5) ausgeübt wird, entgegenwirkt.

2. Kupplungsrohr gemäss Anspruch 1,
**dadurch gekennzeichnet,**
dass das Gegengewicht (16) unmittelbar neben dem Kragen (17) angeordnet ist und die Masse des Gegengewichts (16) unter gleichzeitiger Vergrösserung der Schwimmfähigkeit des Kragens (17) vergrössert wird.

3. Kupplungsrohr gemäss Anspruch 1 oder 2,
**dadurch gekennzeichnet,**
dass der rohrförmige Teil (20) des Kupplungsrohrs (19) und zwar wenigstens der Teil desselben, der den Schnellkupplungsteil (5) und das Gegengewicht (21) miteinander verbindet, aus einem im wesentlichen steifen Material, wie z.B. aus Metall, einem faserverstärkten Kunststoff oder dergleichen hergestellt ist.

4. Kupplungsrohr gemäss einem der vorhergehenden Ansprüche,
**dadurch gekennzeichnet,**
dass das Kupplungsrohr (6,15,19) zwei oder mehr Rohrteile (20,23) umfasst, die durch Flansche (24,25) oder dergleichen miteinander verbunden sind.

## Revendications

1. Ensemble de tube de raccordement, destiné en particulier à l'obtention d'un raccordement entre un conduit (9, 18) présent dans de l'eau et un conduit (2) présent sur un récipient (1), ledit ensemble de tube de raccordement (6, 10, 15, 19) et ledit conduit (2) présent sur le récipient (1) étant munis de moyens d'accouplement (4, 5), ledit ensemble de tube de raccordement (6) comportant une rapacité de flottaison au moins partielle, l'extrémité dudit tube de raccordement qui doit être raccordée au conduit (2) présent sur le récipient étant reliée à un élément (11) procurant une capacité de flottaison.
caractérisé en ce que
la partie dudit conduit située à proximité des moyens d'accouplement (5), qui doit être raccordée au conduit (2) présent sur ledit récipient (1), est munie d'un collier (11, 17, 22) procurant à cette partie du conduit une capacité de flottaison et également munie d'un contrepoids (13, 16, 21) situé à une certaine distance dudit collier et du côté opposé de celui-ci par rapport au moyen d'accouplement (5), ledit contrepoids s'opposant au couple de basculement qui est exercé sur le conduit par les moyens d'accouplement (5), lorsque l'ensemble de tube de raccordement est en situation de flottaison.

2. Ensemble de tube de raccordement selon la revendication 1,
caractérisé en ce que
le contrepoids (16) est situé directement à côté du collier (17) et que la masse du contrepoids (16) est augmentée pendant que la capacité de flottaison du collier (17) est augmentée simultanément.

3. Ensemble de tube de raccordement selon la revendication 1 ou 3,
caractérisé en ce que
la partie (20) en forme de tube de l'ensemble (19), à savoir au moins cette partie de celui-ci reliant la pièce d'accouplement rapide (5) au contrepoids (21), est réalisée en un matériau substantiellement rigide, tel qu'un métal, un matériau synthétique renforcé de fibres ou un matériau similaire.

4. Ensemble de tube de raccordement selon l'une des revendications précédentes,
caractérisé en ce que
l'ensemble de tube de raccordement (6, 15, 19) comprend deux parties tubulaires (20, 23), ou plus, qui sont reliées entre elles à l'aide de brides (24, 25) ou de moyens similaires.

FIG. 1

FIG. 2

FIG. 3

FIG. 4

FIG. 5